# EUROPÄISCHE PATENTANMELDUNG

(11) **EP 4 799 477 A1**
(43) Veröffentlichungstag der Anmeldung: **02.09.2026**
(21) Anmeldenummer: 26150581.2
(22) Anmeldetag: 07.01.2026
(51) Int. Cl.: A01M 7/00

(54) **SPRITZEINRICHTUNG FÜR EINE LANDWIRTSCHAFTLICHE ARBEITSMASCHINE UND VERFAHREN ZUM BETREIBEN EINER SPRITZEINRICHTUNG FÜR EINE LANDWIRTSCHAFTLICHE ARBEITSMASCHINE**

(30) Priorität: 27.02.2025 DE 102025107437
(71) Anmelder: Amazonen-Werke H. Dreyer SE & Co. KG, 49205 Hasbergen (DE)
(72) Erfinder: Heidemann, Linus, 49205 Hasbergen (DE); Austermann, Stefan, 49205 Hasbergen (DE); Dembeck, Achim, 49205 Hasbergen (DE)
(74) Vertreter: Heisel, Per-Christian

(57) **Zusammenfassung**

Spritzeinrichtung (10) für eine landwirtschaftliche Arbeitsmaschine zum Ausbringen eines Spritzmittels auf einer landwirtschaftlichen Nutzfläche, umfassend wenigstens einen Vorratsbehälter (11) zum Vorhalten des Spritzmittels, wenigstens eine Rühreinrichtung (20) zum Umwälzen und/oder Umrühren des im Vorratsbehälter (11) vorgehaltenen und/oder vorhaltbaren Spritzmittels mittels zumindest eines Teils des Spritzmittels selbst, wobei die wenigstens eine Rühreinrichtung (20) zumindest teilweise im Vorratsbehälter (11) angeordnet ist, und wenigstens eine einstellbare Verstelleinrichtung (210-230) zum Beeinflussen zumindest eines durch die Rühreinrichtung (20) durchleitbaren und/oder ausleitbaren Rührstroms des zumindest einen Teils des Spritzmittels. Um eine Spritzeinrichtung (10) für eine landwirtschaftliche Arbeitsmaschine anzugeben, bei welcher der Rührstrom und damit die Rührintensität mit gesteigerter Flexibilität an den jeweiligen Bedarf anpassbar ist und dabei insbesondere einfach im Aufbau ist, eine Steuerungs- und/oder Regelungseinrichtung (100) vorgesehen, welche dazu eingerichtet ist, zumindest einen aus dem Rührstrom resultierenden Rührdruck und zumindest einen aus dem Rührstrom resultierenden Rührvolumenstrom zumindest nahezu unabhängig voneinander anhand und/oder auf der Basis von mehreren Einstellparametern, welche an der wenigstens einen Verstelleinrichtung (210-230) einstellbar sind, zu steuern und/oder zu regeln.

## Beschreibung

Die Erfindung betrifft eine Spritzeinrichtung für eine landwirtschaftliche Arbeitsmaschine gemäß dem Oberbegriff des Patentanspruches 1, eine landwirtschaftliche Arbeitsmaschine zum Ausbringen von Spritzmittel gemäß dem Oberbegriff des Patentanspruches 16 und ein Verfahren zum Betreiben einer Spritzeinrichtung für eine landwirtschaftliche Arbeitsmaschine gemäß dem Oberbegriff des Patentanspruches 17.

Im Bereich der Landwirtschaft werden in der Regel getragene, gezogene und/oder selbstfahrende landwirtschaftliche Arbeitsmaschinen eingesetzt. Derartige Arbeitsmaschinen sind je nach Anwendung häufig zum Ausbringen eines Spritzmittels auf einer landwirtschaftlichen Nutzfläche vorgesehen und umfassen in der Regel eine Spritzeinrichtung. Je nach Anwendung kann eine derartige Arbeitsmaschine mit einer Spritzeinrichtung insbesondere nach Art einer Feldspritze, einer Sä- und/oder Düngermaschine oder eines Hackgeräts ausgeführt sein.

Eine gattungsgemäße Spritzeinrichtung ist beispielsweise aus den Druckschriften EP 0 405 179 A1, EP 1 023 831 B1 oder DE 10 2015 105 968 A1 bereits bekannt. Demnach umfasst die Spritzeinrichtung zumindest einen Vorratsbehälter zum Vorhalten des Spritzmittels und wenigstens eine Rühreinrichtung zum Umwälzen und/oder Umrühren des im Vorratsbehälter vorgehaltenen und/oder vorhaltbaren Spritzmittels mittels zumindest eines Teils des Spritzmittels selbst. Die wenigstens eine Rühreinrichtung ist dabei zumindest teilweise im Vorratsbehälter angeordnet. Ferner umfasst die Spritzeinrichtung wenigstens eine einstellbare Verstelleinrichtung zum Beeinflussen zumindest eines durch die Rühreinrichtung durchleitbaren und/oder ausleitbaren Rührstroms des zumindest einen Teils des Spritzmittels. Insbesondere ist dabei eine Fördereinrichtung zum Fördern des Spritzmittels aus dem Vorratsbehälter und/oder des zumindest einen Teils des Spritzmittels zu der wenigstens einen Rühreinrichtung vorgesehen.

Eine weitere derartige Spritzeinrichtung ist außerdem aus der Druckschrift DE 195 08 291 A1 bekannt, welche insbesondere mehrere Fördereinrichtungen zum Fördern des Spritzmittels aus dem Vorratsbehälter und/oder des zumindest einen Teils des Spritzmittels zu der wenigstens einen Rühreinrichtung umfasst.

Um bei derartigen Spritzeinrichtungen geräte- bzw. maschinenintern eine möglichst homogene Durchmischung des auszubringenden Spritzmittels bzw. der Spritzflüssigkeit zu erreichen, bedarf es typischerweise einer Anpassung des Rührstroms und damit der Rührintensität, damit beispielsweise Aufschäumungen (zu hohe Rührintensität) und/oder ein Absetzen von einzelnen Stoffen (zu geringe Rührintensität) im Vorratsbehälter vermieden werden können. Hierfür bedarf es insbesondere einer Anpassung des Rührstroms an das jeweilige verwendete Spritzmittel und/oder den Füllstand des Vorratsbehälters. Auch wenn sich die aus dem Stand der Technik bereits bekannten Spritzeinrichtungen in der landwirtschaftlichen Praxis hinsichtlich des Durchmischens des Spritzmittels grundsätzlich bewährt haben, ist in vielen Betriebssituationen weiterhin ein Kompromiss zwischen einer bedarfsgerechten Rührintensität und der Effizienz, insbesondere der Förderungs- und/oder Strömungseffizienz beim Fördern des Spritzmittels, hinzunehmen.

Vor diesem Hintergrund stellt sich die vorliegende Erfindung die Aufgabe, eine Spritzeinrichtung für eine landwirtschaftliche Arbeitsmaschine anzugeben, bei welcher der Rührstrom und damit die Rührintensität mit gesteigerter Flexibilität an den jeweiligen Bedarf, insbesondere an das Spritzmittel und/oder den Füllstand des Vorratsbehälters, anpassbar ist und dabei insbesondere einfach im Aufbau ist.

Zur Lösung der vorstehenden Aufgabe wird eine Spritzeinrichtung mit den Merkmalen des Anspruchs 1 vorgeschlagen. Insbesondere ist zur Lösung dieser Aufgabe eine Steuerungs- und/oder Regelungseinrichtung vorgesehen, welche dazu eingerichtet ist, zumindest einen aus dem Rührstrom resultierenden Rührdruck und zumindest einen aus dem Rührstrom resultierenden Rührvolumenstrom zumindest nahezu unabhängig voneinander anhand und/oder auf der Basis von mehreren Einstellparametern, welche an der wenigstens einen Verstelleinrichtung einstellbar sind, zu steuern und/oder zu regeln. Die Steuerungs- und/oder Regelungseinrichtung ist dabei bevorzugt nach Art einer elektronischen Steuerungs- und/oder Regelungseinrichtung ausgeführt.

In Folge dieser Maßnahme ist während des Betriebs der Rührdruck und Rührvolumenstrom zumindest weitestgehend separat und/oder unabhängig voneinander anpassbar. Die Steuerungs- und/oder Regelungseinrichtung ist mittels der Einstellparameter bevorzugt dazu eingerichtet, die wenigstens eine Verstelleinrichtung derart anzusteuern und/oder einzustellen, dass der Rührdruck bei zumindest nahezu gleichbleibendem oder beizubehaltendem Rührvolumenstrom anpassbar oder angepasst ist. Alternativ oder zusätzlich ist die Steuerungs- und/oder Regelungseinrichtung dazu eingerichtet, die wenigstens eine Verstelleinrichtung derart anzusteuern und/oder einzustellen, dass der Rührvolumenstrom bei zumindest nahezu gleichbleibendem oder beizubehaltendem Rührdruck anpassbar oder angepasst ist. Vereinfacht dargestellt, kann somit bei Bedarf beispielsweise nur der Rührdruck zur Anpassung des Rührstroms und damit der Rührintensität bzw. Rührleistung anpassbar sein oder angepasst werden, ohne dabei den Rührvolumenstrom oder Rührdurchfluss zu verändern. Alternativ oder zusätzlich wäre auch ein umgekehrtes Vorgehen denkbar, bei dem bei Bedarf bevorzugt nur der Rührvolumenstrom zur Anpassung des Rührstroms und damit der Rührintensität bzw. Rührleistung anpassbar ist oder angepasst wird, ohne dabei den Rührdruck zu verändern. Somit ist der Rührstrom und damit die Rührintensität oder Rührleistung besonders flexibel und mit weiter gesteigerter Effizienz an den jeweiligen Bedarf, insbesondere Füllstand des Vorratsbehälters, anpassbar.

Die Einstellparameter sind hierbei vorzugsweise zum Einstellen und/oder Parametrieren der wenigstens einen Verstelleinrichtung vorgesehen. Bevorzugt sind die Einstellparameter unterschiedlich ausgeführt. Bei Verwendung mehrerer Verstelleinrichtungen und/oder mehrerer der Verstelleinrichtung zugeordneter Verstellelemente, können die Einstellparameter alternativ oder zusätzlich gleich ausgeführt sein, wobei dabei wenigstens ein Einstellparameter jeweils für eine andere Verstelleinrichtung und/oder ein anderes Verstellelement vorgesehen ist.

Im erfindungsgemäßen Zusammenhang ist die wenigstens eine Rühreinrichtung besonders bevorzugt derart angeordnet, dass sie bei befülltem Vorratsbehälter zumindest teilweise in das bevorratete Spritzmittel hineinragt und/oder vom Spritzmittel umgeben bzw. umschlossen ist. Die Rühreinrichtung ist somit vorzugsweise derart angeordnet, dass sie sich bei befülltem Vorratsbehälter zumindest teilweise unterhalb eines im Vorratsbehälter resultierenden Flüssigkeitsspiegels des Spritzmittels befindet.

Die wenigstens eine Rühreinrichtung ist vorzugsweise nach Art einer hydraulischen Rühreinrichtung bzw. nach Art eines hydraulischen Rührwerks ausgebildet. Ein derart realisiertes Umwälzen und/oder Umrühren des im Vorratsbehälter befindlichen Spritzmittels hat insbesondere das Ziel, das im Vorratsbehälter vorgehaltene und/oder bevorratete Spritzmittel während des Betriebs möglichst gleichmäßig zu vermischen und/oder eine zumindest weitestgehend homogene Lösung des Spritzmittels zu gewährleisten. Insbesondere soll somit ein Absetzen einzelner im Spritzmittel befindlicher Stoffe bzw. Wirkstoffe vermieden werden. Dies wird insbesondere dadurch erreicht, dass die wenigstens eine Rühreinrichtung dazu eingerichtet ist, das im Vorratsbehälter vorgehaltene und/oder bevorratete Spritzmittel mit wenigstens einem Teil oder einer Teilmenge des Spritzmittels selbst umzurühren und/oder zu vermischen. Vorzugsweise ist die Rühreinrichtung hierzu dazu eingerichtet, den zumindest einen Teil des Spritzmittels als, insbesondere druckbeaufschlagten, Rührstrom in den Vorratsbehälter, vorzugsweise in das vorgehaltene und/oder bevorratete Spritzmittel, einzuleiten. Alternativ oder zusätzlich können der Rühreinrichtung eine oder mehrere im Vorratsbehälter angeordnete Düsen zugeordnet sein und/oder zumindest ein in den Vorratsbehälter ragendes Ende der Rühreinrichtung als wenigstens eine Düse ausgebildet sein, um damit insbesondere einen besonders intensiven Rührstrom und damit Rührwirkung/Rührintensität zu erreichen. Ferner kann die wenigstens eine Rühreinrichtung innerhalb des Vorratsbehälters in mehrere beabstandete Abschnitte unterteilt sein. Alternativ oder zusätzlich können auch mehrere Rühreinrichtungen innerhalb des Vorratsbehälters vorgesehen sein.

Das Spritzmittel ist hierbei bevorzugt als landwirtschaftliche Spritzflüssigkeit ausgeführt. Das Spritzmittel kann dabei aus wenigstens einer Trägerflüssigkeit oder Grundbrühe und/oder wenigstens einem Wirkstoff ausgeführt sein. Die wenigstens eine Trägerflüssigkeit oder Grundbrühe und der wenigstens eine Wirkstoff können dabei bereits vor der Ausbringung und/oder während der Ausbringung zum auszubringenden Spritzmittel bzw. zur auszubringenden Spritzflüssigkeit vermischt oder angerührt werden. Alternativ oder zusätzlich kann der wenigstens eine Wirkstoff maschinenintern über eine Einspülschleuse und/oder nach Art einer Direkteinspeisung zu der Trägerflüssigkeit zugegeben und/oder zudosiert werden. Das auszubringende Spritzmittel bzw. die Spritzflüssigkeit kann dabei je nach Anwendung nach Art eines Pflanzenschutzmittels, Düngemittels, Unkraut- und/oder Schädlingsbekämpfungsmittels oder dergleichen ausgeführt sein.

Insbesondere können der Spritzeinrichtung ein oder mehreren Vorratsbehälter zugeordnet sein. Das wenigstens eine Spritzmittel kann dabei in dem einen oder den mehreren Vorratsbehältern bevorratbar sein. Ferner können unterschiedliche Spritzmittel in unterschiedlichen Vorratsbehältern bevorratbar sein. Ferner kann wenigstens einer der mehreren Vorratsbehälter für eine Trägerflüssigkeit oder Grundbrühe und wenigstens ein anderer Vorratsbehälter für wenigstens einen Wirkstoff vorgesehen sein. Des Weiteren kann wenigstens ein Vorratsbehälter nach Art eines, insbesondere großvolumigen, Flüssigkeitstanks und/oder Haupttanks und wenigstens ein weiterer oder anderer Vorratsbehälter nach Art eines, insbesondere kleinvolumigen, Wirkstoffgebindes oder Wirkstoffkanisters ausgeführt sein. Bevorzugt kann dabei vorgesehen sein, dass die wenigstens eine Rühreinrichtung im zumindest einen, insbesondere großvolumigen, Flüssigkeitstank und/oder Haupttank angeordnet ist.

Darüber hinaus ist in der Spritzeinrichtung vorzugsweise wenigstens eine Fördereinrichtung, insbesondere Pumpe, vorgesehen. Die wenigstens eine Fördereinrichtung kann dabei beispielsweise als Verdrängerpumpe oder Strömungspumpe ausgebildet sein. Ferner bevorzugt ist eine als Kreiselpumpe oder Kolbenmembranpumpe ausgebildete Fördereinrichtung. Alternativ oder zusätzlich kann die Fördereinrichtung aber auch nach einer anderen Art von Pumpen, beispielsweise als Drehkolbenpumpe oder dergleichen, ausgebildet sein. Besonders bevorzugt ist eine, insbesondere zentrale, Fördereinrichtung vorgesehen, welche dazu eingerichtet ist, dass Spritzmittel sowohl entlang eines der Spritzeinrichtung zugeordneten Haupt- oder Versorgungsförderpfads als auch entlang eines oder mehrerer Rührpfade und/oder Rühreinrichtungen zu fördern. Eine derartig ausgebildete Spritzeinrichtung ist besonders einfach im Aufbau. Ferner können alternativ oder zusätzlich mehrere Fördereinrichtungen vorgesehen sein, wobei die Fördereinrichtungen dabei besonders bevorzugt unterschiedlichen Förderpfaden oder Pumpenkreisläufen zugeordnet sind, wodurch insbesondere die Flexibilität noch weiter gesteigert ist. Darüber hinaus ist vorzugsweise vorgesehen, dass die Steuerungs- und/oder Regelungseinrichtung dazu eingerichtet ist, die eine oder die mehreren Fördereinrichtungen mit wenigstens einem weiteren und/oder anderen Einstellparameter einzustellen und/oder zu parametrieren. Beispielsweise kann der wenigstens eine weitere und/oder andere Einstellparameter zum Anpassen der Förderleistung, insbesondere des Förderdrucks und/oder Fördervolumenstroms, der einen oder der mehreren Fördereinrichtungen vorgesehen sein. Insbesondere kann dabei vorgesehen sein, dass zur Beeinflussung und/oder Anpassung des Rührstroms alternativ oder zusätzlich die Förderleistung, insbesondere der Förderdruck und/oder Fördervolumenstrom, der einen oder der mehreren Fördereinrichtungen von der Steuerungs- und/oder Regelungseinrichtung angepasst wird.

Ferner sind ein oder mehrere der Spritzeinrichtung zugeordnete Messeinrichtungen bevorzugt, welche besonders bevorzugt signalleitend mit der Steuerungs- und/oder Regelungseinrichtung verbunden sind. Die Steuerungs- und/oder Regelungseinrichtung ist mittels der einen oder den mehreren Messeinrichtungen dazu eingerichtet, wenigstens einen Parameter des Spritzmittels zu bestimmen. Alternativ oder zusätzlich ist die Steuerungs- und/oder Regelungseinrichtung mittels der einen oder den mehreren Messeinrichtungen vorzugsweise dazu eingerichtet, den Füllstand des Spritzmittels im Vorratsbehälter zu bestimmen. Ferner kann die Steuerungs- und/oder Regelungseinrichtung bevorzugt dazu eingerichtet sein, die jeweiligen Signale der einen oder mehreren Messeinrichtungen bei der Vorgabe der jeweiligen, insbesondere notwendigen, Einstellparameter und/oder bei der Einstellung der wenigstens einen Verstelleinrichtung zu berücksichtigen. Darüber hinaus wäre auch denkbar, dass die Steuerungs- und/oder Regelungseinrichtung alternativ oder zusätzlich dazu eingerichtet ist, weitere und/oder andere Signale oder Vorgaben, wie beispielsweise manuelle Eingaben eines Bediener, Wetterdaten und/oder Ausbringmenge usw. bei der Vorgabe der jeweiligen, insbesondere notwendigen, Einstellparameter und/oder bei der Einstellung der wenigstens einen Verstelleinrichtung zu berücksichtigen.

Unter dem Begriff oder Teilbegriff "Pfad" bzw. "-pfad" ist in diesem Zusammenhang insbesondere eine Leitung zu verstehen, welche zum, insbesondere druckbeaufschlagten, Fördern oder Leiten von Spritzmittel bzw. Spritzflüssigkeit vorgesehen ist. Der jeweilige Pfad kann dabei je nach Ausführung nach Art einer abzweigenden Stichleitung oder als Kreis- oder Ringleitung ausgeführt sein. Der Begriff "abzweigend" bedeutet in diesem Zusammenhang, insbesondere dass ein jeweiliger Pfad, beispielsweise der wenigstens eine Rührpfad in spritzmittelausleitender Weise stromabwärts der Fördereinrichtung am Haupt- und/oder Versorgungsförderpfad angeordnet und/oder mit diesem verbunden ist.

Des Weiteren können der Spritzeinrichtung ein oder mehrere Ausbringelemente zum Ausbringen und/oder Ausspritzen des Spritzmittels zugeordnet sein. Die Ausbringelemente sind dabei bevorzugt als Spritzdüsen ausgeführt und in fluidleitender Weise mit dem Haupt- und/oder Versorgungsförderpfad und/oder einem davon abzweigenden Spritzpfad verbindbar und/oder dazu eingerichtet, das Spritzmittel in Form eines Spritzfächers auf die landwirtschaftliche Nutzfläche und/oder darauf befindlichen Pflanzen zu applizieren. Ferner bevorzugt kann zwischen dem Haupt- und/oder Versorgungsförderpfad und/oder dem Spritzpfad und einem jeweiligen Ausbringelement wenigstens ein Ventil zum bedarfsgerechten Freigeben, Sperren und/oder Dosieren des Spritzmittels angeordnet sein. Darüber hinaus können die Ausbringelemente entlang eines der Arbeitsmaschine zugeordneten und/oder höhengeführten Spritzgestänges angeordnet sein. Weiterhin können die Ausbringelemente als Einfachdüsenkörper mit einer einzigen Düse oder als Mehrfachdüsenkörper mit mehreren Düsen ausgeführt sein und/oder einer von mehreren Teilbreiten zugeordnet sein. Die Ausbringelemente, insbesondere deren Ventile, können dabei als PWM- oder PWFM-Ventile ausgebildet sein.

Unter dem Begriff "Druck", also beispielsweise dem Rührdruck, ist im erfindungsgemäßen Zusammenhang vorzugsweise ein Druck des Spritzmittels zu verstehen, insbesondere mit dem das Spritzmittel innerhalb eines jeweiligen Pfads bzw. einer jeweiligen Leitung, hier beispielsweise dem Rührpfad oder der Rührleitung, beaufschlagt ist und/oder gefördert wird. Ferner ist alternativ oder zusätzlich unter dem Begriff "Volumenstrom", also beispielsweise dem Rührvolumenstrom, ein Volumenstrom des Spritzmittels zu verstehen, insbesondere mit dem das Spritzmittel innerhalb eines jeweiligen Pfads bzw. einer jeweiligen Leitung, hier beispielsweise dem Rührpfad oder der Rührleitung, gefördert wird.

Des Weiteren kann die Spritzeinrichtung während des Betriebs dazu eingerichtet sein, entweder gleichzeitig einen Teil des Spritzmittels über den Haupt- und/oder Versorgungsförderpfad und/oder den Spritzpfad und die Ausbringelemente auszubringen und dabei einen anderen Teil des Spritzmittels zum Umrühren bzw. Umwälzen des Spritzmittels im Vorratsbehälter, insbesondere über den Rührpfad, in den Vorratsbehälter fördern. Alternativ oder zusätzlich kann die Spritzeinrichtung während des Betriebs dazu eingerichtet sein, zumindest einen Teil des Spritzmittels entweder über den Haupt- und/oder Versorgungsförderpfad und/oder den Spritzpfad und die Ausbringelemente auszubringen oder zum Umrühren bzw. Umwälzen des Spritzmittels, insbesondere über den Rührpfad, in den Vorratsbehälter zu fördern. Alternativ oder zusätzlich dazu, kann zumindest ein weiterer oder anderer Teil des Spritzmittels während des Betriebs über wenigstens einen weiteren oder zusätzlichen Förderpfad der Spritzeinrichtung, beispielsweise einen Rücklaufpfad oder Bypass, umleitbar sein.

In einer bevorzugten Ausführungsform der erfindungsgemäßen Spritzeinrichtung umfasst die Verstelleinrichtung zumindest eine Ventileinrichtung, welche vorzugsweise dazu eingerichtet ist, den wenigstens einen Rührstrom in Abhängigkeit zumindest eines der mehreren Einstellparameter anzupassen, insbesondere zu beeinflussen und/oder zu sperren und/oder freizugeben. Die Ventileinrichtung ist vorzugsweise derart angeordnet, dass zumindest ein Teil des Spritzmittels und/oder Rührstroms durch die Ventileinrichtung durchgeleitet wird und/oder durchleitbar ist. Die Ventileinrichtung kann dabei insbesondere in einem vollständig verschlossenen Zustand, bei dem ein Durchfluss des Spritzmittels und/oder Rührstroms gesperrt ist, und/oder in einem vollständig geöffneten Zustand, bei dem ein Durchfluss des Spritzmittels und/oder Rührstroms freigegeben ist, verbringbar sein. Alternativ oder zusätzlich kann die Ventileinrichtung auch in wenigstens einer Zwischenstellung verbringbar sein, bei welcher das Spritzmittel und/oder der Rührstrom zumindest teilweise, insbesondere mit einem angepassten Rührdruck und/oder Rührvolumenstrom, durchleitbar ist. Die wenigstens eine Ventileinrichtung ist bevorzugt nach Art eines Druckregelventils ausgebildet. Ferner bevorzugt kann die wenigstens eine Ventileinrichtung als Proportionalventil oder Wegeventile ausgebildet sein. Die wenigstens eine Ventileinrichtung kann alternativ oder zusätzlich auch als Magnetventil ausgebildet sein. Eine derartige Ausführungsform ermöglicht in einfacher Weise eine präzise Anpassung des wenigstens einen Rührstroms.

In einer Weiterbildung der erfindungsgemäßen Spritzeinrichtung ist die zumindest eine Ventileinrichtung nach Art eines pulsweitenmodulierenden und/oder pulsweitenfrequenzmodulierenden Ventils, insbesondere eines PWM- und/oder PWFM-Ventils, ausgebildet. Die Ventileinrichtung ist dabei vorzugsweise in Abhängigkeit von zumindest einem, zwei oder sämtlichen der mehreren Einstellparameter einstellbar. Mit einer derartigen Ausführungsform ist eine besonders einfach aufgebaute Spritzeinrichtung realisiert, welche eine besonders präzise Anpassung des Rührstroms und damit der Rührintensität ermöglicht.

In einer anderen bevorzugten Ausführungsform der erfindungsgemäßen Spritzeinrichtung betrifft wenigstens einer der mehreren Einstellparameter eine einstellbare Pulsweite, insbesondere einen Duty-Cycle, und/oder eine einstellbare Pulsfrequenz. Insbesondere ist somit eine künstliche Blendengröße zum Beeinflussen und/oder Anpassen des Rührstroms einstellbar, welche in Abhängigkeit des einen oder der mehreren Einstellparameter anpassbar ist.

In einer anderen Weiterbildung der erfindungsgemäßen Spritzeinrichtung umfasst die Verstelleinrichtung mehrere Ventileinrichtungen. Die mehreren Ventileinrichtungen sind dabei vorzugsweise jeweils in Abhängigkeit eines oder einiger der mehreren Einstellparameter einstellbar. Hierbei kann vorgesehen sein, dass wenigstens einer oder einige der mehreren Einstellparameter zur Einstellung wenigstens einer ersten Ventileinrichtung und wenigstens ein weiterer und/oder anderer der mehreren Einstellparameter zur Einstellung wenigstens einer zweiten Ventileinrichtung und/oder einer weiteren oder anderen Verstelleinrichtung vorgesehen ist. Somit kann beispielsweise vorgesehen sein, dass die mehreren Verstelleinrichtung und/oder mehrere Ventileinrichtungen jeweils mit den gleichen oder unterschiedlichen Einstellparametern einstellbar sind und/oder eingestellt werden. Alternativ oder zusätzlich können die mehreren Verstelleinrichtungen und/oder mehrere Ventileinrichtungen derart angeordnet sein, dass entweder der gleiche Teil des Spritzmittels und/oder Rührstroms durch die mehreren Verstelleinrichtungen und/oder mehrere Ventileinrichtungen durchleitbar ist und/oder unterschiedliche Teile des Spritzmittels und/oder Rührstroms. Eine derartige Ausführungsform hat den entscheidenden Vorteil, dass der Rührstrom und damit die Rührintensität noch flexibler und/oder präziser an den jeweiligen Bedarf anpassbar ist.

In einer weiteren bevorzugten Ausführungsform der erfindungsgemäßen Spritzeinrichtung ist der wenigstens einen Rühreinrichtung zumindest ein Rührpfad zugeordnet. Der wenigstens eine Rührpfad zweigt bevorzugt von einem zwischen dem Vorratsbehälter und einer Vielzahl von Spritzdüsen angeordneten Haupt- und/oder Versorgungsförderpfad ab. Bevorzugt ist ferner, dass über den wenigstens einen Rührpfad zumindest ein Teil des Spritzmittels in einstellbarer Weise zu der wenigstens einen Rühreinrichtung zuleitbar und/oder förderbar ist. Die wenigstens eine Verstelleinrichtung, insbesondere die wenigstens eine Ventileinrichtung, ist dabei vorzugsweise am und/oder entlang des zumindest einen Rührpfads angeordnet. Alternativ oder zusätzlich kann auch vorgesehen sein, dass mehrere Verstelleinrichtungen und/oder mehrere Ventileinrichtungen am und/oder entlang des wenigstens einen Rührpfads angeordnet sind. Hierbei ist der Rührstrom in direkter Weise bzw. unmittelbar mittels der einen oder den mehreren Verstelleinrichtungen und/oder Ventileinrichtungen beeinflussbar.

In einer weiteren Weiterbildung der erfindungsgemäßen Spritzeinrichtung umfasst die Spritzeinrichtung mehrere Rühreinrichtungen. Den Rühreinrichtungen ist vorzugsweise jeweils mindestens einer von mehreren Rührpfaden zugeordnet. Ferner ist besonders bevorzugt wenigstens einem der mehreren Rührpfade zumindest eine Verstelleinrichtung, insbesondere Ventileinrichtung, zugeordnet. Die jeweiligen Rührpfade zweigen vorzugsweise jeweils von einem Haupt-und/oder Versorgungsförderpfad und/oder entlang eines Haupt- und/oder Versorgungsförderpfads ab. Alternativ oder zusätzlich können die mehreren Rührpfade voneinander abzweigen. Mit anderen Worten kann wenigstens einer der Rührpfade von wenigstens einem anderen Rührpfad abzweigen. Bei einer derartigen Ausführungsform sind die jeweiligen Rührströme zumindest weitestgehend individuell und/oder separat voneinander anpassbar, wodurch die Rührintensität noch flexibler anpassbar ist.

Darüber hinaus ist ein erfindungsgemäße Spritzeinrichtung bevorzugt, bei welcher die Steuerungs- und/oder Regelungseinrichtung dazu eingerichtet ist, die wenigstens eine Verstelleinrichtung, insbesondere die wenigstens eine Ventileinrichtung, derart anzusteuern, dass in auswählbarer Weise eine und/oder einige der mehreren Rühreinrichtungen und/oder sämtliche der mehreren Rühreinrichtungen aktiviert und/oder aktivierbar sind. Insbesondere kann dabei vorgesehen sein, dass der Rührstrom nur durch eine oder einige der mehreren Rühreinrichtungen in den Vorratsbehälter eingeleitet wird und/oder einleitbar ist. Alternativ oder zusätzlich kann auch vorgesehen sein, dass der Rührstrom oder die Rührströme durch alle Rühreinrichtungen gleichzeitig in den Vorratsbehälter eingeleitet werden und/oder einleitbar sind. Die Rührströme können dabei zueinander im Wesentlichen gleich oder unterschiedlich sein. Beispielsweise kann auch vorgesehen sein, dass die jeweiligen gleichzeitig eingeleiteten und/oder einleitbaren Rührströme sich hinsichtlich des Rührdrucks und/oder Rührvolumenstroms unterscheiden. Somit ist die Flexibilität hinsichtlich der Rührintensität noch weiter gesteigert.

In einer anderen bevorzugten Ausführungsform der erfindungsgemäßen Spritzeinrichtung umfasst die Spritzeinrichtung wenigstens einen weiteren und/oder zusätzlichen von einem Haupt- und/oder Versorgungsförderpfad abzweigenden Förderpfad. Der Haupt- und/oder Versorgungsförderpfad ist dabei vorzugsweise stromabwärts des wenigstens einen Vorratsbehälters angeordnet, wobei besonders bevorzugt wenigstens eine Fördereinrichtung entlang des Haupt-und/oder Versorgungsförderpfads angeordnet ist. Alternativ oder zusätzlich kann der Haupt- und/oder Versorgungsförderpfad stromabwärts der wenigstens einen Fördereinrichtung angeordnet sein, wobei das Spritzmittel mittels der Fördereinrichtung aus dem Vorratsbehälter angesaugt und in druckbeaufschlagter Weise entlang des Haupt- und/oder Versorgungsförderpfad förderbar ist. Besonders bevorzugt ist vorgesehen, dass das Spritzmittel mittels der wenigstens einen Fördereinrichtung und dem Haupt- und/oder Versorgungsförderpfad zu einem oder mehreren an einem Spritzgestänge angeordneten Ausbringelementen, insbesondere Spritzdüsen, förderbar ist. Darüber hinaus ist entlang des wenigstens einen weiteren und/oder zusätzlichen von einem Haupt- und/oder Versorgungsförderpfad abzweigenden Förderpfad bevorzugt zumindest ein weiterer Teil des Spritzmittels förderbar. Der weitere und/oder zusätzliche Förderpfad ist hierbei vorzugsweise nach Art eines Rücklaufpfades bzw. Bypasses ausgebildet und zum Zurückleiten des wenigstens einen weiteren Teils des Spritzmittels zum Vorratsbehälter und/oder zu der stromabwärts des Vorratsbehälters angeordneten Fördereinrichtung, insbesondere Pumpe, vorgesehen. Dabei kann bevorzugt entlang des wenigstens einen weiteren und/oder zusätzlichen Förderpfads wenigstens eine weitere Verstelleinrichtung, insbesondere Ventileinrichtung, angeordnet sein, welche besonders bevorzugt zum Beeinflussen des wenigstens einen Rührstroms, insbesondere Rührdrucks und/oder Rührvolumenstroms, vorgesehen ist. Insbesondere ist der Rührstrom mittels des wenigstens einen weiteren und/oder zusätzlichen Förderpfads und wenigstens eine weitere Verstelleinrichtung in indirekter Weise, insbesondere durch Beeinflussung Strömung des Spritzmittels im Haupt- und/oder Versorgungsförderpfad, beeinflussbar und/oder anpassbar.

Bei einer besonders bevorzugten Ausführungsform der erfindungsgemäßen Spritzeinrichtung umfasst die wenigstens eine Verstelleinrichtung zumindest ein im Vorratsbehälter angeordnetes und der wenigstens einen Rühreinrichtung zugeordnetes Verstellglied, mittels dem wenigstens ein über die Rühreinrichtung in den Vorratsbehälter einleitbarer Rührstrom in verstellbarer Weise beeinflussbar ist. Das wenigstens eine Verstellglied ist dabei verszugsweise verschiebbar und/oder verschwenkbar ausgebildet. Ferner kann das wenigstens eine Verstellglied enltang des Rührpfads und/oder an wenigstens einem Ende des Rührpfads angeordnet sein. Alternativ oder zusätzlich kann das wenigstens eine Verstellglied nach Art einer verstellbaren Blende ausgebildet sein. Ferner kann das Verstellglied dazu eingerichtet sein, den wenigstens einen, insbesondere in den Vorratsbehälter einleitbaren und/oder eingeleiteten, Rührstrom zumindest teilweise umzulenken.

In einer besonders bevorzugten Weiterbildung der erfindungsgemäßen Spritzeinrichtung weist die wenigstens eine Rühreinrichtung und/oder das wenigstens eine Verstellglied mehrere Austrittsöffnungen für den Rührstrom auf, welche in ihrer Anzahl und/oder Größe zum Durchleiten des wenigstens einen Rührstroms anpassbar sind. Bevorzugt ist der wenigstens eine Rührstrom in auswählbarer Weise durch zumindest eine, einige und/oder alle der mehreren Austrittsöffnungen in den Vorratsbehälter einleitbar. Alternativ oder zusätzlich kann die jeweilige Größe, insbesondere Querschnitt, wenigstens einer Austrittsöffnung anpassbar sein.

Bei einer weiteren besonders bevorzugten Ausführungsform der erfindungsgemäßen Spritzeinrichtung ist die Steuerungs- und/oder Regelungseinrichtung dazu eingerichtet, zumindest einen entlang des wenigstens einen Rührpfads und/oder der Rühreinrichtung resultierenden Öffnungs- und/oder Blendenquerschnitt mittels der wenigstens einen Verstelleinrichtung anzupassen. Insbesondere ist dabei vorgesehen, dass die Steuerungs- und/oder Regelungseinrichtung dazu eingerichtet ist, zumindest einen an der einen oder den mehreren Austrittsöffnungen resultierenden Öffnungs- und/oder Blendenquerschnitt mittels der wenigstens einen Verstelleinrichtung anzupassen. Die wenigstens eine Verstelleinrichtung umfasst dabei vorzugweise wenigstens eine Ventileinrichtung und/oder wenigstens eine Verstellglied, mittels welchen der Öffnungs- und/oder Blendenquerschnitt anpassbar ist.

Die der Erfindung zugrunde liegende Aufgabe wird ebenso mit einer Spritzeinrichtung mit den Merkmalen des Anspruchs 13 gelöst, wobei die Verstelleinrichtung insbesondere wenigstens eine Ventileinrichtung umfasst, welche nach Art eines pulsweitenmodulierenden und/oder pulsweitenfrequenzmodulierenden Ventils, insbesondere eines PWM- und/oder PWFM-Ventils, ausgebildet ist, und welche vorzugsweise entlang zumindest eines von einem Haupt- und/oder Versorgungsförderpfad abzweigenden Rührpfads angeordnet ist. Hinsichtlich der Vorteile und Modifikationen wird zunächst auf die Vorteile und Modifikationen der vorstehenden beschriebenen bevorzugten Ausführungsformen und Weiterbildungen der erfindungsgemäßen Spritzeinrichtung verwiesen.

Es wird ausdrücklich darauf hingewiesen, dass die Merkmale der vorstehend beschriebenen erfindungsgemäßen Spritzeinrichtung und/oder der bevorzugten Ausführungsformen und/oder Ausführungsbeispiele, wie sie weiter oben beschrieben werden, einzeln oder miteinander kombinierbar bei der erfindungsgemäßen Spritzeinrichtung gemäß Anspruch 13 Anwendung finden können. Dies gilt auch andersherum. So können auch Merkmale der erfindungsgemäßen Spritzeinrichtung gemäß Anspruch 13 mit weiteren Merkmalen der erfindungsgemäßen Spritzeinrichtung gemäß Anspruch 1 und/oder den bevorzugten Ausführungsformen und Ausführungsbeispielen kombiniert werden.

Die der Erfindung zugrunde liegende Aufgabe wird außerdem mit einer Spritzeinrichtung mit den Merkmalen des Anspruchs 14 gelöst, wobei die Verstelleinrichtung insbesondere wenigstens ein Verstellglied umfasst, welches zum Anpassen einer oder mehrerer, vorzugsweise an der Rühreinrichtung und/oder am Verstellglied angeordneter, Austrittsöffnungen für den Rührstrom vorgesehen ist. Hinsichtlich der Vorteile und Modifikationen wird zunächst auf die Vorteile und Modifikationen der vorstehenden beschriebenen bevorzugten Ausführungsformen und Weiterbildungen der erfindungsgemäßen Spritzeinrichtung verwiesen.

Auch hier wird ausdrücklich darauf hingewiesen, dass die Merkmale der vorstehend beschriebenen erfindungsgemäßen Spritzeinrichtung, insbesondere gemäß Anspruch 1 und 13, und/oder der bevorzugten Ausführungsformen und/oder Ausführungsbeispiele, wie sie weiter oben beschrieben werden, einzeln oder miteinander kombinierbar bei der erfindungsgemäßen Spritzeinrichtung gemäß Anspruch 14 Anwendung finden können. Dies gilt auch andersherum. So können auch Merkmale der erfindungsgemäßen Spritzeinrichtung gemäß Anspruch 14 mit weiteren Merkmalen der erfindungsgemäßen Spritzeinrichtung gemäß Anspruch 1 und/oder 13 und/oder den bevorzugten Ausführungsformen und Ausführungsbeispielen kombiniert werden.

Die der Erfindung zugrunde liegende Aufgabe wird darüber hinaus mit einer Spritzeinrichtung mit den Merkmalen des Anspruchs 15 gelöst, wobei insbesondere mehrere Rühreinrichtungen und mehrere Rührpfade vorgesehen sind, wobei jeder der mehreren Rühreinrichtungen wenigstens einer der mehreren Rührpfade zugeordnet ist, und wobei die wenigstens eine Verstelleinrichtung, vorzugsweise jeweils wenigstens eine der Verstelleinrichtung zugeordnete Ventileinrichtung, derart entlang der mehreren Rührpfade angeordnet ist, dass bedarfsgerecht und in auswählbarer Weise nur eine, einige und/oder alle der mehreren Rühreinrichtungen gleichzeitig betreibbar und/oder mittels des Spritzmittels durchströmbar sind. Hinsichtlich der Vorteile und Modifikationen wird zunächst auf die Vorteile und Modifikationen der vorstehenden beschriebenen bevorzugten Ausführungsformen und Weiterbildungen der erfindungsgemäßen Spritzeinrichtung verwiesen.

Ebenso wird auch hier ausdrücklich darauf hingewiesen, dass die Merkmale der vorstehend beschriebenen erfindungsgemäßen Spritzeinrichtung, insbesondere gemäß Anspruch 1, 13 und 14 und/oder der bevorzugten Ausführungsformen und/oder Ausführungsbeispiele, wie sie weiter oben beschrieben werden, einzeln oder miteinander kombinierbar bei der erfindungsgemäßen Spritzeinrichtung gemäß Anspruch 15 Anwendung finden können. Dies gilt auch andersherum. So können auch Merkmale der erfindungsgemäßen Spritzeinrichtung gemäß Anspruch 15 mit weiteren Merkmalen der erfindungsgemäßen Spritzeinrichtung gemäß Anspruch 1, 13 und/oder 14 und/oder den bevorzugten Ausführungsformen und Ausführungsbeispielen kombiniert werden.

Die der Erfindung zugrunde liegende Aufgabe wird außerdem mit einer landwirtschaftlichen Arbeitsmaschine, vorzugsweise Feldspritze, mit den Merkmalen des Anspruchs 16 gelöst, wobei die Arbeitsmaschine insbesondere eine Spritzeinrichtung umfasst, welche nach zumindest einer der vorstehend beschriebenen Ausführungsformen und/oder Weiterbildungen der erfindungsgemäßen Spritzeinrichtungen ausgebildet ist. Hinsichtlich der Vorteile und Modifikationen wird zunächst auf die Vorteile und Modifikationen der vorstehenden beschriebenen bevorzugten Ausführungsformen und Weiterbildungen der erfindungsgemäßen Spritzeinrichtung verwiesen.

Des Weiteren wird auch hier ausdrücklich darauf hingewiesen, dass die Merkmale der vorstehend beschriebenen erfindungsgemäßen Spritzeinrichtung, insbesondere gemäß Anspruch 1, 13, 14 und 15 und/oder der bevorzugten Ausführungsformen und/oder Ausführungsbeispiele, wie sie weiter oben beschrieben werden, einzeln oder miteinander kombinierbar bei der erfindungsgemäßen Arbeitsmaschine gemäß Anspruch 16 Anwendung finden können. Dies gilt auch andersherum. So können auch Merkmale der erfindungsgemäßen Arbeitsmaschine gemäß Anspruch 16 mit weiteren Merkmalen der erfindungsgemäßen Spritzeinrichtung gemäß Anspruch 1, 13, 14 und 15 und/oder den bevorzugten Ausführungsformen und Ausführungsbeispielen kombiniert werden.

Die der Erfindung zugrunde liegende Aufgabe wird ferner mit einem Verfahren zum Betreiben einer Spritzeinrichtung mit den Merkmalen des Anspruchs 17 gelöst, wobei insbesondere eine Steuerungs- und/oder Regelungseinrichtung vorgesehen ist, mittels welcher zumindest ein aus dem Rührstrom resultierender Rührdruck und zumindest einen aus dem Rührstrom resultierender Rührvolumenstrom zumindest nahezu unabhängig voneinander anhand und/oder auf der Basis von mehreren Einstellparametern, welche an der wenigstens einen Verstelleinrichtung einstellbar sind, gesteuert und/oder geregelt werden. Hinsichtlich der Vorteile und Modifikationen wird zunächst auf die Vorteile und Modifikationen der vorstehenden beschriebenen bevorzugten Ausführungsformen und Weiterbildungen der erfindungsgemäßen Spritzeinrichtung und/oder Arbeitsmaschine verwiesen.

Darüber hinaus wird auch hier ausdrücklich darauf hingewiesen, dass die Merkmale der vorstehend beschriebenen erfindungsgemäßen Spritzeinrichtung und/oder Arbeitsmaschine, insbesondere gemäß Anspruch 1, 13, 14, 15 und 16 und/oder der bevorzugten Ausführungsformen und/oder Ausführungsbeispiele, wie sie weiter oben beschrieben werden, einzeln oder miteinander kombinierbar bei dem erfindungsgemäßen Verfahren gemäß Anspruch 17 Anwendung finden können. Dies gilt auch andersherum. So können auch Merkmale des erfindungsgemäßen Verfahrens gemäß Anspruch 17 mit weiteren Merkmalen der erfindungsgemäßen Spritzeinrichtung oder Arbeitsmaschine gemäß Anspruch 1, 13, 14, 15 und/oder 16 und/oder den bevorzugten Ausführungsformen und Ausführungsbeispielen kombiniert werden.

Weitere Einzelheiten der Erfindung sind der Beispielsbeschreibung und den Zeichnungen zu entnehmen. Die Zeichnungen zeigen
- Fig.1: ein erstes Ausführungsbeispiel einer erfindungsgemäße Spritzeinrichtung in einer schematischen Darstellung;
- Fig.2: ein zweites Ausführungsbeispiel einer erfindungsgemäße Spritzeinrichtung in einer schematischen Darstellung; und
- Fig.3: ein drittes Ausführungsbeispiel einer erfindungsgemäße Spritzeinrichtung in einer schematischen Darstellung.

In der nachfolgenden Beschreibung werden gleiche Bezugszeichen für gleiche Gegenstände verwendet.

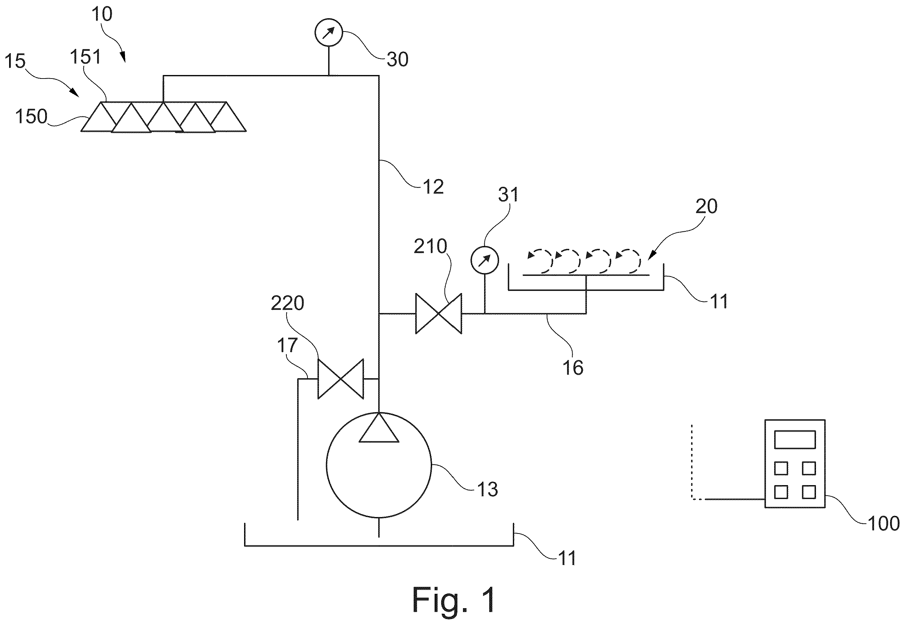

Ein erstes Ausführungsbeispiel für eine erfindungsgemäße Spritzeinrichtung 10 für eine in den Figuren nicht näher dargestellte landwirtschaftliche Arbeitsmaschine zum Ausbringen eines Spritzmittels auf einer landwirtschaftlichen Nutzfläche ist in der Fig.1 gezeigt.

Die landwirtschaftliche Arbeitsmaschine kann dabei je nach Anwendung beispielsweise als landwirtschaftliche Feldspritze ausgebildet sein.

Wie in der Fig.1 zu erkennen, weist die dargestellte Spritzeinrichtung 10 wenigstens einen Vorratsbehälter 11 zum Vorhalten und/oder Bevorraten zumindest eines auszubringenden Spritzmittels auf. Aus Darstellungsgründen ist ist der Vorratsbehälter 11 in den Figuren an zwei unterschiedlichen Positionen zu erkennen, wobei es sich dabei um ein und denselben Vorratsbehälter handelt. In einem alternativen oder zusätzlichen Beispiel kann es sich dabei den beiden Vorratsbehältern 11 um unterschiedliche Vorratsbehälter handeln. Des Weiteren ist insbesondere ein Haupt- und/oder Versorgungsförderpfad 12 zu sehen, welcher in fluidleitender Weise mit dem Vorratsbehälter 11 verbunden ist. Entlang des Haupt- und/oder Versorgungsförderpfads 12 ist insbesondere wenigstens eine, hier als Flüssigkeitspumpe ausgebildete, Fördereinrichtung 13 zum, insbesondere druckbeaufschlagten, Fördern des im Vorratsbehälter 11 vorgehaltenen und/oder bevorrateten Spritzmittels angeordnet. An dem Haupt- und/oder Versorgungsförderpfad 12 sind insbesondere eine Vielzahl von über der Nutzfläche verbringbaren und zum Ausbringen des Spritzmittels vorgesehene Ausbringelemente 15, beispielsweise Spritzdüsen, angeordnet. Alternativ oder zusätzlich kann die Spritzeinrichtung 10 wenigstens einen von dem Haupt- und/oder Versorgungsförderpfad 12 abzweigenden Spritzpfad aufweisen, an welchem die Ausbringelemente 15 angeordnet sind. Die Ausbringelemente 15 sind hierbei vereinfacht dargestellt, mittels vertikal nach unten weisender Spritzfächer 150 an einem Spritzbalken 151 angedeutet. Das von der Fördereinrichtung 13 aus dem wenigstens einen Vorratsbehälter 11 angesaugte und/oder ansaugbare Spritzmittel ist dabei zumindest zum Teil und mit einem einstellbaren Druck bzw. Versorgungsdruck entlang des Haupt- und/oder Versorgungsförderpfad 12 förderbar. Insbesondere ist dabei vorgesehen, dass das Spritzmittel mit dem jeweiligen eingestellten und/oder einstellbaren Versorgungsdruck und/oder einem davon abzweigenden einstellbaren Spritzdruck an und/oder unmittelbar vor den Ausbringelementen 15 zum Applizieren auf der Nutzfläche ansteht und/oder beaufschlagt ist.

Des Weiteren umfasst die Spritzeinrichtung 10 wenigstens eine Rühreinrichtung 20 zum Umwälzen und/oder Umrühren des im Vorratsbehälter 11 vorgehaltenen und/oder vorhaltbaren Spritzmittels mittels zumindest eines Teils des Spritzmittels selbst. Wie zu erkennen, ist die wenigstens eine Rühreinrichtung 20 hierfür zumindest teilweise im Vorratsbehälter 11 angeordnet.

Insbesondere ist der Rühreinrichtung 20 zumindest ein Rührpfad 16 zugeordnet, welcher in diesem Ausführungsbeispiel von dem Haupt- und/oder Versorgungsförderpfad 12 abzweigt. Während des Betriebs ist zumindest ein Teil des Spritzmittels als Rührstrom über den Rührpfad 16 und/oder in einstellbarer Weise zu der wenigstens einen Rühreinrichtung 20 zuleitbar und/oder förderbar.

Zum Einstellen und/oder Beeinflussen des Rührstroms und damit der Rührintensität im Vorratsbehälter 11 sind ein oder mehrere einstellbare Verstelleinrichtungen 210-230 vorgesehen.

Darüber hinaus ist in diesem Ausführungsbeispiel eine, insbesondere elektronische, Steuerungs- und/oder Regelungseinrichtung 100 vorgesehen, welche dazu eingerichtet ist, einen aus dem Rührstrom resultierenden Rührdruck und zumindest einen aus dem Rührstrom resultierenden Rührvolumenstrom zumindest nahezu unabhängig voneinander anhand und/oder auf der Basis von mehreren Einstellparametern, welche an der einen oder den mehreren Verstelleinrichtungen 210-230 einstellbar sind, zu steuern und/oder zu regeln.

Bei genauerer Betrachtung ist zu erkennen, dass bei diesem Ausführungsbeispiel die Verstelleinrichtung 210 als Ventileinrichtung bzw. als eine erste Ventileinrichtung ausgebildet ist, welche insbesondere dazu eingerichtet ist, den wenigstens einen Rührstrom in Abhängigkeit zumindest eines der mehreren Einstellparameter anzupassen bzw. zu beeinflussen und/oder zu sperren und/oder freizugeben. Insbesondere ist die erste Ventileinrichtung 210 gemäß des ersten Ausführungsbeispiels nach Art eines pulsweitenmodulierenden und/oder pulsweitenfrequenzmodulierenden Ventils, beispielsweise als PWM- und/oder PWFM-Ventil, ausgebildet. Die derart ausgebildete Ventileinrichtung 210 ist in Abhängigkeit mehrerer Einstellparameter einstellbar und/oder parametrierbar. Beispielsweise betrifft wenigstens einer der mehreren Einstellparameter hierbei eine einstellbare Pulsweite, insbesondere einen Duty-Cycle, und/oder eine einstellbare Pulsfrequenz. Alternativ oder zusätzlich wäre auch denkbar, dass die erste Ventileinrichtung 210 mit nur einem oder einem anderen Einstellparameter einstellbar und/oder parametrierbar ist.

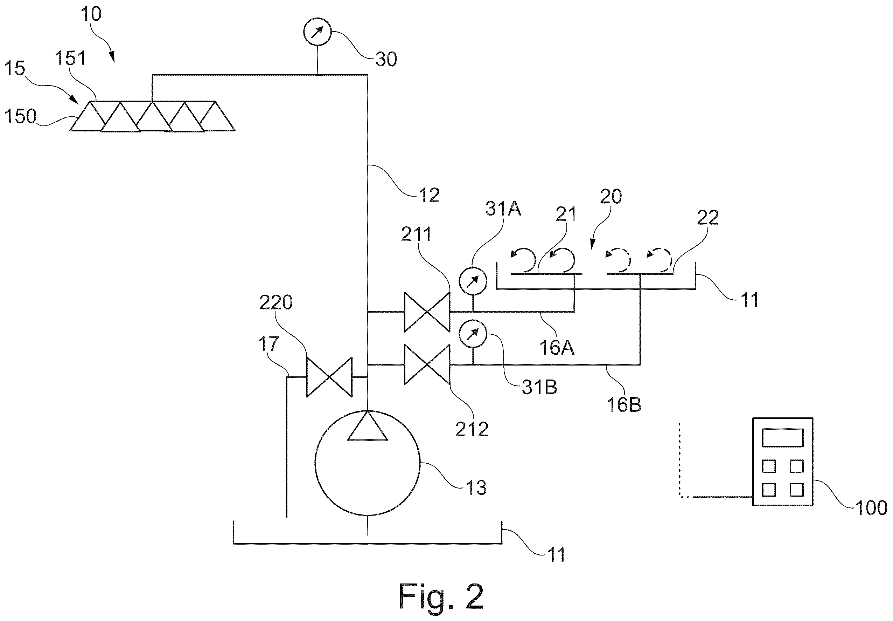

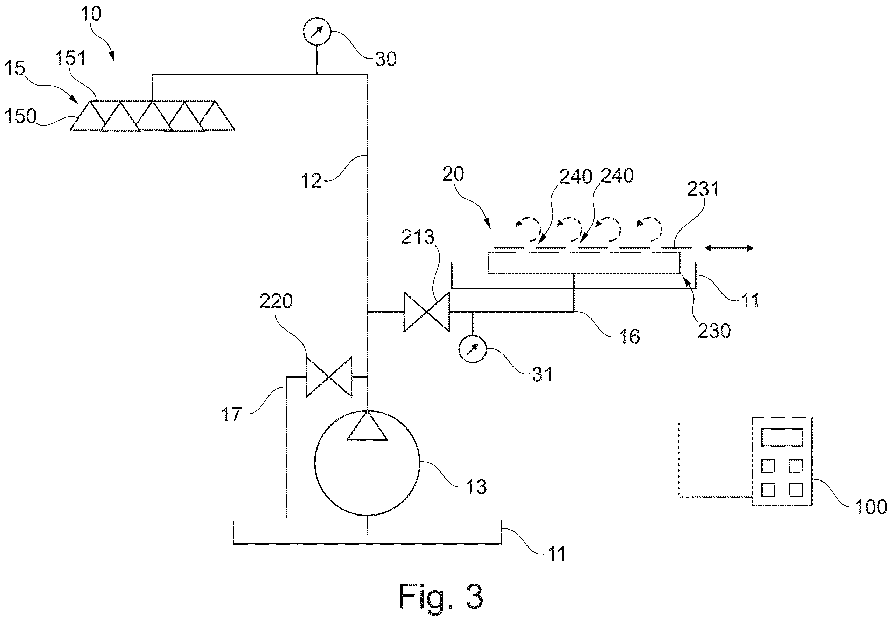

Alternative und/oder zusätzliche erfindungsgemäße Ausführungen werden weiter unten anhand der in den Figuren 2 und 3 gezeigten Ausführungsbeispiele näher beschriebenen.

Weiterhin ist zu erkennen, dass bei dem in Fig.1 gezeigten Ausführungsbeispiel alternativ oder zusätzlich wenigstens eine weitere bzw. zweite Ventileinrichtung 220 als Verstelleinrichtung vorgesehen ist. Die zweite Ventileinrichtung 220 ist hierbei entlang eines optionalen und/oder weiteren von dem Haupt- und/oder Versorgungsförderpfad 12 abzweigenden Förderpfads 17 angeordnet. Der Förderpfad 17 ist in diesem Ausführungsbeispiel nach Art eines Rücklaufpfades bzw. Bypasses zum Zurückleiten wenigstens eines weiteren Teils des Spritzmittels zum Vorratsbehälter 11 ausgebildet. Alternativ oder zusätzlich könnte das Spritzmittel mittels des Förderpfads 17 auch stromaufwärts der Fördereinrichtung 13, insbesondere zwischen den Vorratsbehälter 11 und der Fördereinrichtung 13, einleitbar und/oder zurückleitbar sein. Somit ist die zweite Ventileinrichtung 220 dazu eingerichtet, den Rührstrom in indirekter Weise zu beeinflussen und/oder anzupassen.

Alternativ oder zusätzlich könnte die Fördereinrichtung 13 insbesondere nach Art einer Kreiselpumpe ausgebildet sein, welche dazu eingerichtet ist, die Förderung des Spritzmittels, wie beispielsweise den Förderdruck und/oder Volumenstrom des Spritzmittels, anhand einer Drehzahlsteuerung und/oder Drehzahlregelung anzupassen und/oder zu beeinflussen. Mit anderen Worten könnte somit der Rührstrom, insbesondere Rührdruck und/oder Rührvolumenstrom, alternativ oder zusätzlich mittels der Drehzahlsteuerung und/oder Drehzahlregelung der Fördereinrichtung 13 beeinflussbar sein.

Der Einfachheit und Kürze halber wird in der nachfolgenden Beschreibung nur noch auf die Unterschiede in den ansonsten zueinander übereinstimmenden Ausführungsbeispielen eingegangen.

Alternativ oder zusätzlich zum vorstehend beschriebenen Ausführungsbeispiel, sind in der Fig.2 mehrere Rühreinrichtungen 20 und/oder mehrere Rührabschnitte 21, 22 für die Rühreinrichtung 20 vorgesehen. Ferner sind dabei auch mehrere Rührpfade 16A, 16B vorgesehen, welche den Rühreinrichtungen 20 und/oder Rührabschnitten 21, 22 zugeordnet sind.

Die Verstelleinrichtung 210-230 ist hierbei den mehreren Rühreinrichtungen 20 und/oder Rührpfaden 16A, 16B zugeordnet. Wie zu erkennen, ist die Verstelleinrichtung 210 hierbei bestehend aus einer dritten und vierten Ventileinrichtung 211, 212 ausgeführt, welche insbesondere entlang eines jeweiligen Rührpfades 16A, 16B angeordnet sind. Die Ventileinrichtung 211, 212 sind dabei derart ansteuerbar und/oder betreibbar, dass bedarfsgerecht und in auswählbarer Weise nur eine, einige und/oder alle der mehreren Rühreinrichtungen 20 und/oder Rührabschnitte 21, 22 gleichzeitig betreibbar und/oder mittels des Spritzmittels durchströmbar sind. Ferner kann hierbei alternativ oder zusätzlich vorgesehen sein, dass sich die jeweiligen Rührströme zwischen den mehreren Rührpfaden 16A, 16B mittels der unterschiedlich einstellbaren Ventileinrichtungen 211, 212 unterscheiden. Beispielsweise wäre denkbar, dass sich der Rührdruck und/oder Rührvolumenstrom zwischen den unterschiedlichen Rührströmen unterscheiden. Alternativ oder zusätzlich kann hierbei auch vorstellbar sein, dass die mehreren Rühreinrichtungen 20 und/oder Rührabschnitte 21, 22 zu unterschiedlichen Zeitpunkten, abwechselnd, alternierend usw. betreibbar sind.

Alternativ oder zusätzlich zu den vorstehend beschriebenen Ausführungsbeispielen, umfasst die Verstelleinrichtung 230 in der Fig.3 wenigstens ein Verstellglied 231, welches zum Anpassen ein oder mehrerer, insbesondere an der Rühreinrichtung 20 und/oder am Verstellglied 231 angeordneter, Austrittsöffnungen 240 für den Rührstrom vorgesehen ist.

Wie anhand des Doppelpfeils angedeutet, kann das Verstellglied 231 verschiebbar ausgeführt sein. Alternativ oder zusätzlich kann das Verstellglied 231 aber auch verschwenkbar oder drehbar ausgeführt sein. Insbesondere kann das Verstellglied 231 alternativ oder zusätzlich nach Art einer Blende und/oder Drossel ausgeführt sein. Ebenso kann alternativ oder zusätzlich auch vorgesehen sein, dass die Anzahl und/oder Größe der zum Durchleiten des wenigstens einen Rührstroms vorgesehenen Austrittsöffnungen 240 mittels des wenigstens einen Verstellglieds 231 anpassbar sind. Ferner können auch mehrere derartige Verstellglieder 231 vorgesehen sein.

Nachfolgend werden die oben beschriebenen Ausführungsbeispiele gemeinsam beschrieben und gilt somit entsprechend für die jeweilige Spritzeinrichtung 10.

Es kann beispielsweise ferner vorgesehen sein, dass die Steuerungs- und/oder Regelungseinrichtung 100 dazu eingerichtet ist, wenigstens einen entlang des einen oder der mehreren Rührpfade 16, 16A, 16B und/oder der einen oder der mehreren Rühreinrichtung 20, insbesondere der Austrittsöffnungen 240, resultierenden Öffnungs- und/oder Blendenquerschnitt mittels der wenigstens einen Verstelleinrichtung 210-230, insbesondere der jeweiligen Ventileinrichtung und/oder des Verstellglieds, anzupassen.

Alternativ oder zusätzlich können auch eine oder mehrere Messeinrichtungen 30-31B innerhalb der Spritzeinrichtung 10 vorgesehen sein, welche jeweils dazu eingerichtet sind, einen Durchfluss, insbesondere einen Druck und/oder Volumenstrom, des Spritzmittels zu erfassen. Insbesondere kann wenigstens eine Messeinrichtungen 30-31B dazu eingerichtet sein, den einen oder die mehreren Rührströme, beispielsweise einen jeweiligen Rührdruck und/oder Rührvolumenstrom, zu erfassen. Die Steuerungs- und/oder Regelungseinrichtung 100 kann dabei ferner dazu eingerichtet sein, die jeweiligen Messsignale zum Einstellen und/oder Parametrieren der einen oder der mehreren Verstelleinrichtungen 210-230 zu berücksichtigen.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: Spritzeinrichtung
- 11: Vorratsbehälter
- 12: Haupt- und/oder Versorgungsförderpfad
- 13: Fördereinrichtung
- 15: Ausbringelemente
- 150: Spritzfächer
- 151: Spritzbalken
- 16-16B: Rührpfad
- 17: Weiterer Förderpfad
- 20: Rühreinrichtung
- 21, 22: Rührabschnitt
- 210-230: Verstelleinrichtung
- 210-212: Ventileinrichtung
- 220: Ventileinrichtung
- 231: Verstellglied
- 240: Austrittsöffnung
- 30-31B: Messeinrichtungen
- 100: Steuerungs- und/oder Regelungseinrichtung

## Patentansprüche

1. Spritzeinrichtung (10) für eine landwirtschaftliche Arbeitsmaschine zum Ausbringen eines Spritzmittels auf einer landwirtschaftlichen Nutzfläche, umfassend;
- wenigstens einen Vorratsbehälter (11) zum Vorhalten des Spritzmittels;
- wenigstens eine Rühreinrichtung (20) zum Umwälzen und/oder Umrühren des im Vorratsbehälter (11) vorgehaltenen und/oder vorhaltbaren Spritzmittels mittels zumindest eines Teils des Spritzmittels selbst, wobei die wenigstens eine Rühreinrichtung (20) zumindest teilweise im Vorratsbehälter (11) angeordnet ist; und
- wenigstens eine einstellbare Verstelleinrichtung (210-230) zum Beeinflussen zumindest eines durch die Rühreinrichtung (20) durchleitbaren und/oder ausleitbaren Rührstroms des zumindest einen Teils des Spritzmittels;
**gekennzeichnet durch** eine, insbesondere elektronische, Steuerungs- und/oder Regelungseinrichtung (100), welche dazu eingerichtet ist, zumindest einen aus dem Rührstrom resultierenden Rührdruck und zumindest einen aus dem Rührstrom resultierenden Rührvolumenstrom zumindest nahezu unabhängig voneinander anhand und/oder auf der Basis von mehreren Einstellparametern, welche an der wenigstens einen Verstelleinrichtung (210-230) einstellbar sind, zu steuern und/oder zu regeln.

2. Spritzeinrichtung (10) nach Anspruch 1, **dadurch gekennzeichnet, dass** die Verstelleinrichtung (210-230) zumindest eine Ventileinrichtung (210-212, 220) umfasst, welche vorzugsweise dazu eingerichtet ist, den wenigstens einen Rührstrom in Abhängigkeit zumindest eines der mehreren Einstellparameter anzupassen, insbesondere zu beeinflussen und/oder zu sperren und/oder freizugeben.

3. Spritzeinrichtung (10) nach Anspruch 2, **dadurch gekennzeichnet, dass** die zumindest eine Ventileinrichtung (210-212, 220) nach Art eines pulsweitenmodulierenden und/oder pulsweitenfrequenzmodulierenden Ventils, insbesondere eines PWM- und/oder PWFM-Ventils, ausgebildet ist, welches vorzugsweise in Abhängigkeit von zumindest einem, zwei oder sämtlichen der mehreren Einstellparameter einstellbar ist.

4. Spritzeinrichtung (10) nach Anspruch 3, **dadurch gekennzeichnet, dass** wenigstens einer der mehreren Einstellparameter eine einstellbare Pulsweite, insbesondere einen Duty-Cycle, und/oder eine einstellbare Pulsfrequenz betrifft.

5. Spritzeinrichtung (10) nach zumindest einem der vorgenannten Ansprüche 2 bis 4, **dadurch gekennzeichnet, dass** die Verstelleinrichtung (210-230) mehrere Ventileinrichtungen (210-212, 220) umfasst, wobei die mehreren Ventileinrichtungen (210-212, 220) vorzugsweise jeweils in Abhängigkeit eines oder einiger der mehreren Einstellparameter einstellbar sind.

6. Spritzeinrichtung (10) nach zumindest einem der vorgenannten Ansprüche 2 bis 5, **dadurch gekennzeichnet, dass** der wenigstens einen Rühreinrichtung (20) zumindest ein Rührpfad (16-16B) zugeordnet ist, welcher bevorzugt von einem zwischen dem Vorratsbehälter (11) und einer Vielzahl von Spritzdüsen angeordneten Haupt- und/oder Versorgungsförderpfad (12) abzweigt, und über welchen besonders bevorzugt zumindest ein Teil des Spritzmittels in einstellbarer Weise zu der wenigstens einen Rühreinrichtung (20) zuleitbar und/oder förderbar ist, wobei die Verstelleinrichtung (210-230), insbesondere die wenigstens eine Ventileinrichtung (210-212, 220), vorzugsweise am und/oder entlang des zumindest einen Rührpfads (16-16B) angeordnet ist.

7. Spritzeinrichtung (10) nach Anspruch 6, **dadurch gekennzeichnet, dass** die Spritzeinrichtung (10) mehrere Rühreinrichtungen (20) umfasst, welchen vorzugsweise jeweils wenigstens einer von mehreren Rührpfaden (16-16B) zugeordnet ist, wobei besonders bevorzugt wenigstens einem der mehreren Rührpfade (16-16B) zumindest eine Verstelleinrichtung (210-230), insbesondere Ventileinrichtung (210-212, 220), zugeordnet ist.

8. Spritzeinrichtung (10) nach Anspruch 7, **dadurch gekennzeichnet, dass** die Steuerungs- und/oder Regelungseinrichtung (100) dazu eingerichtet ist, die wenigstens eine Verstelleinrichtung (210-230), insbesondere die wenigstens eine Ventileinrichtung (210-212, 220), derart anzusteuern, dass in auswählbarer Weise:
- eine und/oder einige der mehreren Rühreinrichtungen (20); und/oder
- sämtliche der mehreren Rühreinrichtungen (20);
aktiviert und/oder aktivierbar sind.

9. Spritzeinrichtung (10) nach zumindest einem der vorgenannten Ansprüche 1 bis 8, **dadurch gekennzeichnet, dass** die Spritzeinrichtung (10) wenigstens einen weiteren und/oder zusätzlichen von einem Haupt- und/oder Versorgungsförderpfad (12) abzweigenden Förderpfad (17) umfasst, entlang welchem zumindest ein weiterer Teil des Spritzmittels förderbar ist, wobei der weitere und/oder zusätzliche Förderpfad (17) vorzugsweise nach Art eines Rücklaufpfades bzw. Bypasses zum Zurückleiten des wenigstens einen weiteren Teils des Spritzmittels zum Vorratsbehälter (11) und/oder zu einer stromabwärts des Vorratsbehälters (11) angeordneten Fördereinrichtung (13), insbesondere Pumpe, ausgebildet ist, wobei vorzugsweise entlang des wenigstens einen weiteren und/oder zusätzlichen Förderpfads (17) wenigstens eine weitere Verstelleinrichtung (210-230), insbesondere Ventileinrichtung (210-212, 220), angeordnet ist, welche besonders bevorzugt zum Beeinflussen des wenigstens einen Rührstroms, insbesondere Rührdrucks und/oder Rührvolumenstroms, vorgesehen ist.

10. Spritzeinrichtung (10) nach zumindest einem der vorgenannten Ansprüche 1 bis 9, **dadurch gekennzeichnet, dass** die wenigstens eine Verstelleinrichtung (210-230) zumindest ein im Vorratsbehälter (11) angeordnetes und der wenigstens einen Rühreinrichtung (20) zugeordnetes Verstellglied (230) umfasst, mittels dem wenigstens ein über die Rühreinrichtung (20) in den Vorratsbehälter (11) einleitbarer Rührstrom in verstellbarer Weise beeinflussbar ist.

11. Spritzeinrichtung (10) nach Anspruch 10, **dadurch gekennzeichnet, dass** die Rühreinrichtung (20) und/oder das Verstellglied (230) mehrere Austrittsöffnungen (240) für den Rührstrom aufweist, welche in ihrer Anzahl und/oder Größe zum Durchleiten des wenigstens einen Rührstroms anpassbar sind.

12. Spritzeinrichtung (10) nach zumindest einem der vorgenannten Ansprüche 1 bis 11, **dadurch gekennzeichnet, dass** die Steuerungs- und/oder Regelungseinrichtung (100) dazu eingerichtet ist, zumindest einen entlang des wenigstens einen Rührpfads (16-16B) und/oder der Rühreinrichtung (20), insbesondere der Austrittsöffnungen (240), resultierenden Öffnungs- und/oder Blendenquerschnitt mittels der wenigstens einen Verstelleinrichtung (210-230), insbesondere der Ventileinrichtung (210-212, 220) und/oder des Verstellglieds (230), anzupassen.

13. Spritzeinrichtung (10) für eine landwirtschaftliche Arbeitsmaschine zum Ausbringen eines Spritzmittels auf einer landwirtschaftlichen Nutzfläche, vorzugsweise nach zumindest einem der vorgenannten Ansprüche, umfassend;
- wenigstens einen Vorratsbehälter (11) zum Vorhalten des Spritzmittels;
- wenigstens eine Rühreinrichtung (20) zum Umwälzen und/oder Umrühren des im Vorratsbehälter (11) vorgehaltenen und/oder vorhaltbaren Spritzmittels mittels zumindest eines Teils des Spritzmittels selbst, wobei die wenigstens eine Rühreinrichtung (20) zumindest teilweise im Vorratsbehälter (11) angeordnet ist; und
- wenigstens eine einstellbare Verstelleinrichtung (210-230) zum Beeinflussen zumindest eines durch die Rühreinrichtung (20) durchleitbaren und/oder ausleitbaren Rührstroms des zumindest einen Teils des Spritzmittels;
**dadurch gekennzeichnet, dass** die Verstelleinrichtung (210-230) wenigstens eine Ventileinrichtung (210-212, 220) umfasst, welche nach Art eines pulsweitenmodulierenden und/oder pulsweitenfrequenzmodulierenden Ventils, insbesondere eines PWM- und/oder PWFM-Ventils, ausgebildet ist, welche vorzugsweise entlang zumindest eines von einem Haupt- und/oder Versorgungsförderpfad (12) abzweigenden Rührpfads (16-16B) angeordnet ist.

14. Spritzeinrichtung (10) für eine landwirtschaftliche Arbeitsmaschine zum Ausbringen eines Spritzmittels auf einer landwirtschaftlichen Nutzfläche, vorzugsweise nach zumindest einem der vorgenannten Ansprüche, umfassend;
- wenigstens einen Vorratsbehälter (11) zum Vorhalten des Spritzmittels;
- wenigstens eine Rühreinrichtung (20) zum Umwälzen und/oder Umrühren des im Vorratsbehälter (11) vorgehaltenen und/oder vorhaltbaren Spritzmittels mittels zumindest eines Teils des Spritzmittels selbst, wobei die wenigstens eine Rühreinrichtung (20) zumindest teilweise im Vorratsbehälter (11) angeordnet ist; und
- wenigstens eine einstellbare Verstelleinrichtung (210-230) zum Beeinflussen zumindest eines durch die Rühreinrichtung (20) durchleitbaren und/oder ausleitbaren Rührstroms des zumindest einen Teils des Spritzmittels;
**dadurch gekennzeichnet, dass** die Verstelleinrichtung (210-230) wenigstens ein Verstellglied (230) umfasst, welches zum Anpassen ein oder mehrerer, insbesondere an der Rühreinrichtung (20) und/oder am Verstellglied (230) angeordneter, Austrittsöffnungen (240) für den Rührstrom vorgesehen ist.

15. Spritzeinrichtung (10) für eine landwirtschaftliche Arbeitsmaschine zum Ausbringen eines Spritzmittels auf einer landwirtschaftlichen Nutzfläche, vorzugsweise nach zumindest einem der vorgenannten Ansprüche, umfassend;
- wenigstens einen Vorratsbehälter (11) zum Vorhalten des Spritzmittels;
- wenigstens eine Rühreinrichtung (20) zum Umwälzen und/oder Umrühren des im Vorratsbehälter (11) vorgehaltenen und/oder vorhaltbaren Spritzmittels mittels zumindest eines Teils des Spritzmittels selbst, wobei die wenigstens eine Rühreinrichtung (20) zumindest teilweise im Vorratsbehälter (11) angeordnet ist; und
- wenigstens eine einstellbare Verstelleinrichtung (210-230) zum Beeinflussen zumindest eines durch die Rühreinrichtung (20) durchleitbaren und/oder ausleitbaren Rührstroms des zumindest einen Teils des Spritzmittels;
**dadurch gekennzeichnet, dass** mehrere Rühreinrichtungen (20) und mehrere Rührpfade (16-16B) vorgesehen sind, wobei jeder der mehreren Rühreinrichtungen (20) wenigstens einer der mehreren Rührpfade (16-16B) zugeordnet ist, und wobei die wenigstens eine Verstelleinrichtung (210-230), vorzugsweise jeweils wenigstens eine der Verstelleinrichtung (210-230) zugeordnete Ventileinrichtung (210-212, 220), derart entlang der mehreren Rührpfade (16-16B) angeordnet ist, dass bedarfsgerecht und in auswählbarer Weise nur eine, einige und/oder alle der mehreren Rühreinrichtungen (20) gleichzeitig betreibbar und/oder mittels des Spritzmittels durchströmbar sind.

16. Landwirtschaftliche Arbeitsmaschine, vorzugsweise Feldspritze, zum Ausbringen von Spritzmittel auf einer landwirtschaftlichen Nutzfläche, mit einer Spritzeinrichtung (10), **dadurch gekennzeichnet, dass** die Spritzeinrichtung (10) nach zumindest einem der vorgenannten Ansprüche ausgebildet ist.

17. Verfahren zum Betreiben einer Spritzeinrichtung (10), vorzugsweise einer Spritzeinrichtung (10) und/oder Arbeitsmaschine mit einer Spritzeinrichtung (10) nach zumindest einem der vorgenannten Ansprüche, mit den Schritten:
- Vorhalten des Spritzmittels in wenigstens einem Vorratsbehälter (11);
- Umwälzen und/oder Umrühren des im Vorratsbehälter (11) vorgehaltenen und/oder vorhaltbaren Spritzmittels mit wenigstens einer Rühreinrichtung (20), und mittels zumindest eines Teils des Spritzmittels selbst, wobei die wenigstens eine Rühreinrichtung (20) zumindest teilweise im Vorratsbehälter (11) angeordnet ist;
- Beeinflussen zumindest eines durch die Rühreinrichtung (20) durchleitbaren und/oder ausleitbaren Rührstroms des zumindest einen Teils des Spritzmittels mittels wenigstens einer einstellbare Verstelleinrichtung (210-230);
**gekennzeichnet durch** eine, insbesondere elektronische, Steuerungs- und/oder Regelungseinrichtung (100), mittels welcher zumindest ein aus dem Rührstrom resultierender Rührdruck und zumindest einen aus dem Rührstrom resultierender Rührvolumenstrom zumindest nahezu unabhängig voneinander anhand und/oder auf der Basis von mehreren Einstellparametern, welche an der wenigstens einen Verstelleinrichtung (210-230) einstellbar sind, gesteuert und/oder geregelt werden.
